# EUROPEAN PATENT APPLICATION

(11) **EP 4 273 651 A1**
(43) Date of publication of application: **08.11.2023**
(21) Application number: 22171862.0
(22) Date of filing: 05.05.2022
(51) Int. Cl.: G05B 23/02

(54) **METHOD FOR PROVIDING A REPLACEMENT PART**

(71) Applicant: Seepex GmbH, 46240 Bottrop (DE)
(72) Inventor: Eggers, Martin, 45139 Essen (DE); Uellenbeck, Malwina, Dortmund (DE)
(74) Representative: Andrejewski - Honke Patent- und Rechtsanwälte Partnerschaft mbB

(57) **Abstract**

A method for providing a replacement part (1) or for providing description data or construction data (15) for manufacturing a replacement part (1), the replacement part designed for replacing an initial mechanical machine part (2) of a machine (3) for conveying a medium,
the initial part (2) having an initial mechanical configuration with initial part description data (4),
the method including:
- receiving performance data (5) achieved by monitoring the machine (2) during operation with the initial machine part (2) with one or more measuring devices (6),
- sending the performance data (5) to a modelling server (7),
- calculating on the modelling server (7) multiple optimised mechanical configurations (9) of the replacement part (1) with one or more modelling algorithms (10) based on different optimisation criteria using at least the initial part description data (4) or construction data and the received performance data (5),
- providing a selection (11) of several performance options representing the multiple mechanical configurations (9) of the replacement part (1),
- receiving an input (13) from a user (14) selecting one of the performance options,
- providing the replacement part (1) with the final optimised configuration (9') corresponding to the selected performance option or sending optimised part description data or optimised part construction data (15) for manufacturing the replacement part (1) with the final optimised configuration (9').

## Description

The invention relates to a method for providing a replacement part or for providing description data or construction data for manufacturing a replacement part, the replacement part designed for replacing an initial mechanical machine part of a machine for conveying a medium, the initial machine part having an initial mechanical configuration with initial part description data. The machine generally is part of an industrial plant and/or industrial process or application. The machine is in particular a machine for conveying a medium, for example a pump or a compressor. The medium can be fluid, e. g. in case of a pump, or gaseous, e. g. in case of a compressor. The machine is, for example, a (positive) displacement pump, for example a progressive cavity pump/eccentric screw pump.

The maintenance and servicing of machines is of particular importance in industrial plants and industrial applications which includes the supply of replacement parts/spare parts.

In order to optimise the supply of spare parts, monitoring of the machines and processes is well-known, realising predictive maintenance solutions. However, the focus of predictive maintenance so far is on the timely delivery of necessary parts, so that generally identical replacement parts are delivered for replacement during usual maintenance intervals, or in case of an actual damage or a predicted damage. Overall, predictive maintenance is of great importance in many fields of industry.

Maintenance optimisation for asset performance management is for example described in US 10,466,689 B2. This document suggests a computer implemented method comprising receiving one or more predictive maintenance models each defining a time-based probability of failure for one or more components, receiving current performance data for the components, defining a failure function for each component from the predictive maintenance model for the component and the current performance data for the component, the failure function defining the probability of failure of the component in each of a set of time periods, defining a value loss function for each component from the failure function for the component and a time-based component cost, the value loss function defining the expected value loss due to a planned replacement of the component in a given time period before the component fails or reaches its scheduled end of life, receiving data defining one or more factors that have an impact on the cost of a maintenance option. This method is used for example for a series of machines whereas each machine could be a vehicle in a fleet of vehicles and each component could be discrete components within each vehicle.

Moreover, EP 2 902 930 A2 discusses a system and a method for modelling, simulation, optimisation and/or quote creation. A computer may display on a graphical user interface (GUI) a component library including a set of components relating to a compressed air system. The GUI may have a modelling interface for configuring a virtual model using the set of components. The computer may simulate the virtual model to determine one or more optimisations to the compressed air system. The computer may also determine the cost of implementing the compressor system optimisation.

It is also well-known that additive manufacturing methods are very interesting for optimising and flexibilising the manufacturing process of machines and machine parts. Therefore, EP 3 751 370 A1 describes an additive manufacturing-coupled digital twin ecosystem based on multi-variant distribution model of performance. A method for making or repairing a specified part is described, the method including creating an optimised process to make or repair the specified part, the creating including: receiving data from a plurality of sources, updating, in real-time, a surrogate model corresponding with a physics-based model of the specified part, wherein the surrogate model forms a digital twin of the specified part, generating a multi-variant distribution including component performance and manufacturing variants, the manufacturing variants being associated with at least one of an additive manufacturing process step and a reductive manufacturing process step. A performance from the multi-variant distribution within expected performance of the new part based on the surrogate model is compared and the optimised process is executed, based on the digital twin, to either repair or make the specified part.

Based on the known prior art, it is an object of the invention to suggest an optimised method for providing a replacement part or for providing description data or construction data for manufacturing a replacement part of a machine for conveying a medium.

To achieve this object, the invention teaches a method for providing a replacement part or for providing description data or construction data for manufacturing a replacement part, the replacement part designed for replacing an initial mechanical machine part of a machine for conveying a medium,
the initial part having an initial mechanical configuration with initial part description data,
the method including:
   - receiving performance data achieved by monitoring the machine during operation with the initial machine part with one or more measuring devices,
   - sending the performance data to a modelling server,
   - calculating on the modelling server multiple optimised mechanical configurations of the replacement part with one or more modelling algorithms based on different optimisation criteria using at least the initial part description or construction data and the received performance data,
   - providing a selection of several performance options representing the multiple (optimised) mechanical configurations of the replacement part (according to different optimisation criteria),
   - receiving an input from a user selecting one of the performance options,
   - providing the replacement part with the final optimised configuration corresponding to the selected performance option or sending (optimised part) description data or (optimised part) construction data for manufacturing the replacement part with the (final) optimised configuration.

The machine is in particular a machine for conveying a medium, for example a pump or a compressor.

The machine is for example a displacement pump, for example a progressive cavity pump. A progressive cavity pump (or eccentric screw pump) is a pump from the group of displacement pumps used for pumping a wide variety of media and in particular highly viscose liquids in a wide variety of industries. The conveyed liquids can also contain solids. The pump, e. g., has a pump casing/housing, a stator and a rotor rotating in the stator and a drive mechanism for rotating the rotor, the drive for example connected to the rotor via a connecting shaft and/or a coupling rod whereas the coupling rod compensates for eccentric movement of the rotor or the rotor end.

The invention is based on the idea that predictive maintenance of machines is well-known in the state of the art but is generally focused to timely delivery of replacement parts (spare parts) which are identical to the initial mechanical machine parts. In contrast, the method according to the invention does not provide an identical replacement part that is identical to the initial machine part, but an optimised replacement part for a machine, whereas the optimisation of the part is realised on the basis of performance data achieved by monitoring the machine during operation with the initial machine part with one or more measuring devices. This means that the machine and/or the process performance of the machine within an industrial plant and operating parameters are monitored, and the monitored data is used for calculating an optimised configuration of the replacement part with a modelling algorithm or several algorithms so that an optimised replaceable machine part can be produced according to specifications based on the optimisation process. This basic idea is optimised within the invention in that not only one optimised mechanical configuration of the replacement part is calculated but multiple optimised mechanical configurations of the replacement part are calculated on the modelling server with one or preferably more modelling algorithms based on different optimisation criteria. The optimisation criteria preferably are a "lifetime or durability optimisation" and/or an "operating costs or energy efficiency optimisation" and/or a "manufacturing costs optimisation". The inventive method therefore provides a selection, which means a set of several performance options representing the multiple optimised configurations of the replacement part according to these different optimisation criteria. A user, for example a customer or client who uses the machine, may select one of these options in order to achieve a replacement part optimised under specific conditions. Based on this input of the user selecting one of these performance options, the replacement part is provided which means that the replacement part with the final optimised configuration corresponding to the selected performance option may be manufactured individually based on (optimised part) description data or (optimised part) construction data calculated on the basis of the selected performance option.

Description data is a set of data appropriate and adapted for manufacturing the replacement part (spare part), e. g., a drawing or drawing data including all necessary information for manufacturing the part.

Construction data is a specified set of machining data or program code appropriate and adapted for sending it (directly) to a programmable machine, e. g., a 3D-printer or CNC-machine.

The machine part is a mechanical machine part with mechanical properties which means form, geometry, material and/or material composition. The invention therefore refers to the replacement of a modified mechanical part and not (only) to the modification of software controlling the machine.

The machine part is for example a rotor, a stator, a joint, a bearing or a casing/housing or casing/housing part or casing/housing insert of a machine, for example of a pump or compressor.

The modelling algorithm (or several algorithms) calculate(s) the optimised configurations using at least the initial part description or construction data which means the description or construction data of the machine part to be replaced, and using at least the received performance data which means the performance data achieved by monitoring the machine during operation with the measuring devices. These performance data may include a pressure signal, and/or temperature signal, and/or vibration signal, and/or power consumption signal and/or a flow rate signal. Moreover, the performance data may include process data of an industrial plant into which the machine is integrated. Furthermore, it is possible to (additionally) use other information for optimisation, e. g., financial or economical parameters, such as a TCO (Total Cost of Ownership) optimisation or a LCC (Life Cycle Cost) optimisation.

The machine generally is part of an industrial plant, and the machine is monitored during operation within the industrial plant at an operating location, for example at an industrial site. The performance data achieved by monitoring the machine is for example sent to a server located outside the operating location, the server receiving the performance data. The server receiving the performance data is for example a cloud server or an edge server. An edge server is a local server generally located at or near the machine, e. g. at the industrial site. The edge server is typically part of the network at the operation location / industrial plant, so that no data transfer (via internet) is necessary or realized. A cloud-server is a non-local server located far away from the machine, typically located at a data centre. According to common practice with regard to cloud servers, the cloud server may also be a virtual server. Cloud servers, and virtual cloud servers in particular, typically come with advantages regarding efficiency and availability. Therefore the invention preferably uses a cloud system and the connection to a cloud or cloud server with data transfer, e. g. via internet.

The server receiving the performance data may also be or include the modelling server calculating the multiple optimised mechanical configurations of the replacement part. However, in a preferred embodiment the server receiving the performance data on the one hand and the modelling server on the other hand are different (hardware or virtual) servers which may be located at different places and which are in particular located outside the operating location of the machine.

The invention provides a replacement part with the (final) optimised configuration corresponding to the selected performance option. It is generally possible to provide a completed stock item, if for example a couple of machine parts with different mechanical configurations, all compatible with the original machine, are provided or stocked at the supplier. However, in a preferred embodiment, the optimised replacement part is individually manufactured on the basis of the description data or construction data, for example using a programmable production device. A programmable production device is for example a device for subtractive or for additive manufacturing. A programmable device for subtractive manufacturing is for example a CNC machine. A machine for additive manufacturing is for example a 3D printer.

It is important that a user, for example a customer of the supplier or manufacturer of the machine or the spare parts, may select the preferred performance option. The selection (i. e. the set of different performance options) for selecting a preferred performance option is preferably provided by means of a graphical user interface, in particular via an interactive website which may be an online website (e. g., available on the internet and available via the world wide web) or an offline website (e. g., hosted locally and available via an intranet).

Furthermore, in particular for the case that the user performing the selection is acting as customer or client of the organization performing the optimisation and provision of the replacement part, the inventive method may further include providing a sales quote for the replacement part based on the selected performance option. This means that the client could receive a sales quote before ordering the specific replacement part. The sales quote may be calculated automatically on the basis of the selected performance criteria, and typically contains information such as the price of the selected part, a shipment or delivery date, and delivery terms (e. g., incoterms).

The selection for selecting the performance option, for providing a sales quote and for ordering the replacement part are preferably provided by means of a graphical user interface, in particular via an interactive website which could be an offline website or an online website. Moreover, a portable device may be used which is linked to the interactive website and displays the website, preferably using a web browser software running on the mobile device.

The described optimised configurations of the replacement part are preferably calculated using a prognostic model of predicted performance. The modelling algorithm used for calculating multiple optimised configurations of the replacement part is therefore based on a prognostic model of predicted performance. Examples for modelling algorithms may include finite element method (FEM) physical simulation of the behaviour of the machine and medium (e. g., fluid) for various mechanical configurations of the replacement part, in combination with one or more evaluation functions, which rate(s) the performance of the currently evaluated mechanical configuration based on the optimisation criteria and an iterative method or heuristic which generates potential candidates for evaluation. Examples for iterative methods include gradient descent methods or pattern search methods, examples for heuristics include evolutionary algorithms, genetic algorithms, and hill climbing.

As described, initial part description data and performance data are used for calculation and therefore have to be provided for example from a user/client using the machine within an industrial plant. The initial description or construction data (and the performance data) maybe provided from the client/customer/user to the supplier as a digital object containing the description data, the digital object forming a digital twin of the initial part.

Moreover, as described, the description data or construction data for manufacturing the replacement part with the optimised configuration according to the selected performance option is provided, whereas for example a supplier provides the data to a customer using the machine. This description data or construction data can be provided from the supplier to the client/customer as a digital object forming a digital twin of the optimised part.

A digital object is a machine independent data structure comprising or consisting of an identity, attributes and data in digital form that can be parsed by different information systems and thus enables interoperability between diverse information formats on the internet.

A digital twin is a digital or virtual counterpart of a physical object or process. In particular, a digital twin is a virtual representation (or counterpart) of a (physical) product or workflow/process during its entire life cycle. Generally a digital twin or the digital twin concept is composed of three elements: a physical item in real space, the digital twin in software form and the data that links these two elements.

In particular, it is an advantage to provide the digital object, in particular a digital object containing the part construction data, as a DRM protected digital object which means a digital object protected with a specified Digital Rights Management. This is an advantage in order to prevent unauthorized use of the part construction data, such as multiple productions of the part, and in particular in order to prevent misuse of the data without definite permission by the owner of rights. A DRM method may, for example, include cryptographic signing and encryption of the part construction data, and include a step where the authenticity of the digital object containing the part construction data is verified by the programmable production device prior to the production of the part, and the part construction data is decrypted based on a cryptographic key provided by a server, the server preferably being provided by the supplier, upon successful verification of the digital object. The DRM method may furthermore include a copy limit, which ensures that the part construction data may not be decrypted an arbitrary number of times, e. g., by limiting the number of times the cryptographic key is provided by the server.

The invention not only covers the analysing process and calculation process and the production process of the replacement part but may also cover the corresponding business transactions and business communication, for example, the process step of offering the replacement part with the optimised configuration and the process step of payment.

The inventive method may further provide an ID tag (identification tag) at a location on the machine for conveying a medium, whereas the ID tag is read by the portable device and upon reading the ID tag, the selection is provided on the portable device. The ID tag may be an optical code, for example a QR code or alternatively a radio tag, for example an NFC tag or RFID tag. The ID tag may encode a uniform resource identifier (URI), in particular a uniform resource locator (URL). For example, the ID tag may encode a URL which points to a website which contains the digital twin for the machine, which also provides the selection as one of the options to interact with the digital twin via the website.

Moreover, the invention not only covers the described method but also a system for providing a replacement part or for providing description data or construction data for manufacturing a replacement part, whereas the system uses a method as described or the system preferably is adapted for performing the method described. The system includes at least a modelling server, whereas one or more modelling algorithms are stored on the modelling server, the modelling algorithms calculating multiple optimised mechanical configurations of the replacement part based on different optimisation criteria using at least the initial part description data or construction data and the received performance data. The system is arranged for providing a selection of several performance options representing the multiple optimised mechanical configurations of the replacement part according to different optimisation criteria, whereas this selection may be provided by means of a graphical user interface, for example with a portable device (smartphone, tablet, notebook, smartwatch). Moreover, the system may include the machine with the initial mechanical machine part to be replaced and the system may include one or more measuring devices for monitoring the machine during operation.

In the following, the invention is described in more detail with reference to the following drawings which only show examples of the invention without any restriction of the scope of protection.
- Fig. 1: shows an example of a system and a method according to the invention,
- Fig. 2: shows a detail of a modified embodiment according to Fig. 1 and
- Fig. 3: another embodiment of the invention.

The figures show different embodiments of a system and a method for providing a replacement part 1 of a machine 3 or for providing description data or construction data 15 for manufacturing the replacement part 1.

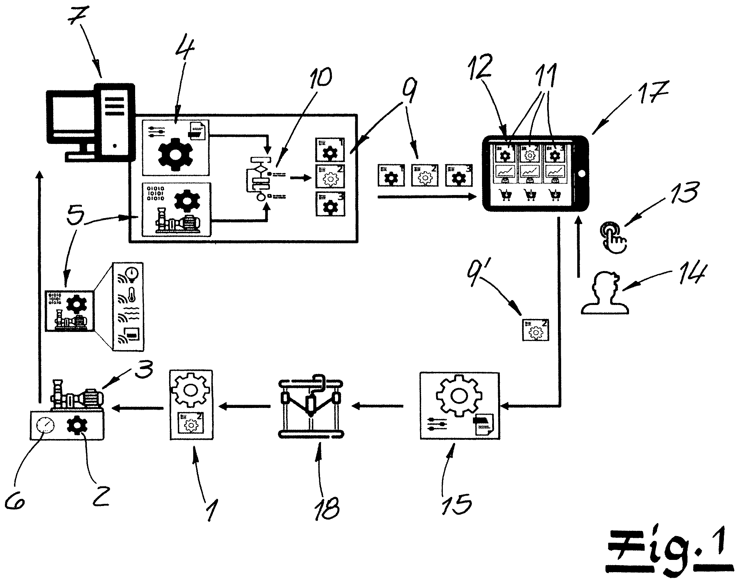

Fig. 1 schematically shows the machine 3 for conveying a medium which could be a pump for example, including several mechanical machine parts and in particular at least one mechanical machine part 2 to be replaced by a replacement part 1. The initial machine part 2 to be replaced is a mechanical part with mechanical properties which means form, geometry, material and/or material composition. The initial mechanical configuration of this machine part 2 is represented by so called initial part description data 4 which is a set of data appropriate and adapted for manufacturing the part, for example a drawing or drawing data including all necessary information for manufacturing the part.

In order to provide a modified and in particular optimised replacement part 1 the invention is based on the idea of monitoring the machine 3 during operation with the initial machine part 2 with one or more measuring devices 6 schematically shown in Fig. 1. The measuring devices 6 provide performance data 5 achieved by monitoring the machine 3 during operation, whereas the performance data 5 may include a pressure signal, a temperature signal, a vibration signal, a power consumption signal or a flow rate signal achieved during operation of the machine 3. This performance data 5 is sent to a modelling server 7 which is configured for calculating an optimised configuration of the replacement part 1 with a modelling algorithm 10. The method according to the invention therefore does not provide an identical replacement part that is identical to the initial machine part but an optimised replacement part 1 for a machine 3. The optimisation of the part is realised on the basis of performance data 5 achieved by monitoring the machine 3 during operation with the initial machine part 2. However, this basic idea is developed further within the invention in that not only one optimised mechanical configuration of the replacement part 1 is calculated but multiple optimised mechanical configurations 9 are calculated on the modelling server 7 with one more modelling algorithms 10 based on different optimisation criteria. These different optimisation criteria are for example a lifetime or durability optimisation and an operating costs or energy efficiency optimisation and a manufacturing costs optimisation. The system, for example the modelling server 7, provides a selection 11 of several performance options which means a set of several performance options, representing the multiple optimised mechanical configurations 9 of the replacement part 1 according to the described optimisation criteria.

As shown in Fig. 1, the selection/set 11 of the multiple optimised configurations 9 is for example provided by means of a graphical user interface 12, for example by means of a portable device 17 presenting/displaying the selection/set 11 of the different performance options or different optimised configurations 9. A user 14, for example a customer who uses the machine, may now select one of these options in order to achieve a replacement part 1 optimised under these specific conditions. This input/selection 13 of the specific performance option is sent to a server, which may be the modelling server or another server providing the selected final optimised configurations, whereas the server provides the final optimised description data or final optimised construction data 15 for manufacturing the replacement part 1 with the final optimised configuration 9'. This data is for example sent to a programmable production device 18 which is for example a device for additive manufacturing or alternatively for subtractive manufacturing. The device 18 produces the specific replacement part 1 which is not identical to the initial replacement part 2 but which is specifically optimised on the basis of the monitoring data 5 and in particular optimised on the basis of a specific optimisation criteria selected by the user/client 14.

The new and modified replacement part 1 is sent to the customer installing this replacement part 1 to the machine 3 in order to replace the initial part 2. As an alternative, the optimised part description data or construction data 15 can be sent to the customer directly who is able to produce the replacement part on his own or an external facility using a programmable production device.

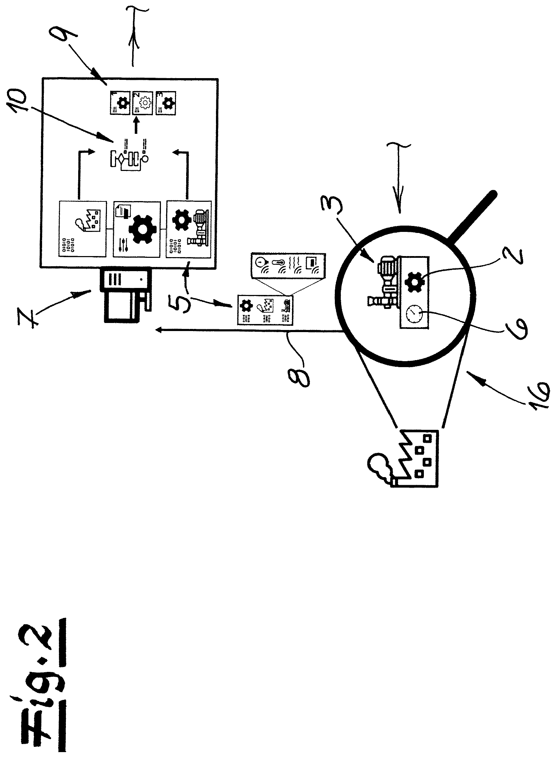

As described with regard to Fig. 1 the modelling server 7 calculates the optimised mechanical configuration of the replacement part on the basis of the performance data 5 achieved by monitoring the machine with the monitoring devices 6. Fig. 2 shows a modified embodiment of the invention whereas the machine 3 is part of an industrial plant 16 creating and providing additionally process data 8 of the industrial plant 16. According to Fig. 2 this process data 8 is also sent to the modelling server 7 so that a modelling server 7 not only receives the performance data 5 of the machine 3 but also the process data 8 of the industrial plant 16 including the machine 3. The modelling server 7 calculates the multiple optimised mechanical configurations 9 of the replacement part 1 not only on the basis of the performance data 5 but also on the basis of the process data 8 received from the industrial plant 16.

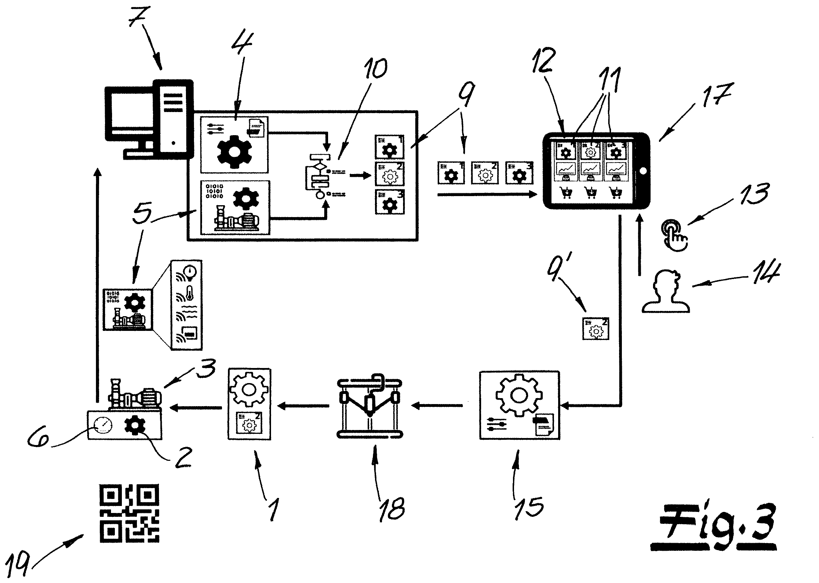

Fig. 3 shows a modified embodiment of the invention using a machine 3 which is equipped with an ID tag 19 located on the machine, for example on the casing of the machine whereas this ID tag can be read by a portable device 17, for example a smart phone. Upon reading the ID tag 19, the portable device directly provides the selection 11 described above which means that the portable device 17 provides the possibility to select a specified optimisation criterion. The ID tag 19 preferably is an optical code, for example a QR code. As an alternative, the ID tag can be a radio tag, for example an NFC tag or a RFID tag. Preferably the ID tag 19 encodes a uniform resource identifier (URI), in particular an uniform resource locator (URL).

All figures show embodiments with a modelling server 7 which receives the data, calculates the different configurations and sends these configurations to the portable device 17. This modelling server 7 can be an edge server which is for example located at the industrial plant or at the industrial site near the machine. As an alternative the modelling server 7 can be a cloud server which is a nonlocal server located far away from the machine. Moreover, it is possible to use several servers whereas one or more servers can be edge servers and one or more servers can be cloud servers, in particular, servers located at a data centre and/or virtual servers running in a cloud computing environment.

As shown in the figures, the modelling server 7 uses not only the performance data 5 receiving from the machine but also the initial part description data 4 or initial part construction data characterising the detailed construction of the initial part which is to be replaced by an optimised part. The figures show the possibility that this initial part construction or description data 4 is stored in the modelling server 7 which means that the modelling server 7 has all necessary information about the initial part. Alternatively, it is also possible that the modelling server 7 receives the necessary information about the initial part 2 from another source, for example from another server or directly from the machine. In any case it is an advantage, if the initial part description 4 or construction data 15 is provided as a digital object forming a digital twin of the initial part 2. Moreover, it is an advantage if the description data 4 or construction data 15 of the replacement part 1 is provided as a digital object, forming a digital twin of the final replacement part 1. Preferably these digital objects are provided as DRM (Digital Rights Management) protected digital objects. These details are not shown in the figures.

As already described, the invention not only covers the system and the analysing process and calculation process and the production process of the replacement part 1 but also the corresponding business transactions and business communication, for example the process step of offering the replacement part 1 with optimised configuration and the process step of payment. These optional process steps are not shown in the figures.

## Claims

1. A method for providing a replacement part (1) or for providing description data or construction data (15) for manufacturing a replacement part (1), the replacement part designed for replacing an initial mechanical machine part (2) of a machine (3) for conveying a medium,
the initial part (2) having an initial mechanical configuration with initial part description data (4),
the method including:
- receiving performance data (5) achieved by monitoring the machine (2) during operation with the initial machine part (2) with one or more measuring devices (6),
- sending the performance data (5) to a modelling server (7),
- calculating on the modelling server (7) multiple optimised mechanical configurations (9) of the replacement part (1) with one or more modelling algorithms (10) based on different optimisation criteria using at least the initial part description data (4) or construction data and the received performance data (5),
- providing a selection (11) of several performance options representing the multiple mechanical configurations (9) of the replacement part (1),
- receiving an input (13) from a user (14) selecting one of the performance options,
- providing the replacement part (1) with the final optimised configuration (9') corresponding to the selected performance option or sending optimised part description data or optimised part construction data (15) for manufacturing the replacement part (1) with the final optimised configuration (9').

2. The method according to claim 1, whereas the optimisation criteria include at least one of a "lifetime or durability optimisation", an "operating costs or energy efficiency optimisation" and/or a "manufacturing costs optimisation".

3. The method according to claim 1 or 2, wherein the machine (3) for conveying a medium is a pump or a compressor, for example a (positive) displacement pump, in particular a progressive cavity pump.

4. The method according to any of claims 1 to 3, whereas the machine part (2) is a mechanical machine part with mechanical properties such as form, material and/or material composition.

5. The method according to any of claims 1 to 4, whereas the machine part (2) is at least one of a rotor, a stator, a joint, a bearing and a casing or casing part or casing insert.

6. The method according to any of claims 1 to 5, whereas the performance data (5) includes at least one of a pressure signal, a temperature signal, a vibration signal, a power consumption signal and a flow rate signal.

7. The method according to any of claims 1 to 6, whereas the machine (2) is part of an industrial plant (16), whereas in addition to the performance data (5) also process data (8) of the industrial plant (16) is sent to the modelling server (7) and optionally is used for calculating the multiple optimised mechanical configurations (9).

8. The method according to any of claims 1 to 7, whereas the selection (11) for selecting the performance option is provided by means of a graphical user interface (12), in particular via an interactive online or offline website.

9. The method according to any of claims 1 to 8, further including monitoring the machine (3) during operation at an operating location, for example at an industrial plant, with the one or more measuring devices (6) and providing or sending the performance data (5) to a server, e. g. to the modelling server (7).

10. The method according to any of claims 1 to 9, whereas the server, e. g. the modelling server (7), is a cloud server located outside the operation location, whereas the data preferably is transferred via internet.

11. The method according to any of claims 1 to 9, whereas the server, e. g. the modelling server (7), is an edge server located at the operation location.

12. The method according to any of claims 1 to 11, the method further including manufacturing of the replacement part (1) based on the construction data (15) provided for the selected performance option.

13. The method according to claim 12, whereas the replacement part (1) is manufactured using a programmable production device (18), for example a device for subtractive or for additive manufacturing.

14. The method according to any of claims 1 to 13, whereas the modelling algorithm (10) calculating multiple optimised configurations of the replacement part uses a prognostic model of predicted performance.

15. The method according to any of claims 1 to 14, whereas the initial part description data (4) is provided as a digital object forming a digital twin of the initial part (2).

16. The method according to any of claims 1 to 15, further including providing a digital object containing a specification of the (optimised) replacement part (1), for example a 3D model and/or material specifications and/or the description data or construction data (15) of the replacement part (1), the digital object forming a digital twin of the final replacement part (1).

17. The method according to claim 15 or 16 whereas the digital object is provided as a DRM (Digital Rights Management) protected digital object.

18. The method according to any of claims 1 to 17, the method further including providing a sales quote for the replacement part (1) based on the selected performance option.

19. The method according to any of claims 1 to 18, whereas the selection (11) for selecting the performance option, for providing a sales quote and for ordering the replacement part are provided by means of a graphical user interface (12), in particular by means of an interactive website, e.g. an online or offline website.

20. The method according to claim 19 using a portable device (17) which is linked to the interactive website and/or displays the interactive website.

21. The method according to any of claims 1 to 20 providing an ID tag (19) at a location on the machine (3) for conveying a medium, whereas the ID tag (19) is read by a portable device (17) and upon reading the ID tag, the selection of the several performance options is provided on the portable device (17).

22. The method according to claim 21, whereas the ID tag (19) is an optical code, e. g. a QR code or a radio tag e. g. an NFC tag or RFID tag.

23. The method according to claim 20 or 21, whereas the ID tag (19) encodes a uniform resource identifier (URI).

24. A system for providing a replacement part (1) or for providing description data or construction data (15) for manufacturing a replacement part (1), using a method as claimed in any of claims 1 to 23,
the system including a modelling server (7) set up for receiving performance data (5) achieved by monitoring the machine (3) during operation with the initial machine part (2) and for calculating multiple optimised mechanical configurations (9) of the replacement part (1) with one or more modelling algorithms (10) based on different optimisation criteria using at least the initial part description data (4) or construction data and the received performance data (5) and for providing a selection (11) of several performance options representing the multiple optimised mechanical configurations of the replacement part (1) according to different optimisation criteria.

25. The system according to claim 24, the system further including a machine (3) for conveying a medium containing the mechanical machine part (2) to be replaced and with one or more measuring devices (6) for providing performance data (5) of the machine (3) during operation.

26. The system according to claim 24 or 25, further including a portable device (17) which is linkable to an interactive website and/or displaying an interactive website, the interactive website providing the selection for selecting the performance options.
